Europäisches Patentamt

European Patent Office

Office européen des brevets

(11) Publication number:

**0 300 597**
**A2**

# EUROPEAN PATENT APPLICATION

(21) Application number: 88304355.6

(22) Date of filing: **13.05.88**

(51) Int. Cl.4: **B29C 51/16 , B29C 67/22 , //B29L31:58**

(30) Priority: **24.07.87 US 77436**

(43) Date of publication of application:
**25.01.89 Bulletin 89/04**

(84) Designated Contracting States:
**DE ES FR GB IT**

(71) Applicant: **DAVIDSON TEXTRON INC**
**Industrial Park**
**Dover New Hampshire 03820(US)**

(72) Inventor: **Robinson, Rhonda**
**53 Fifth Street**
**Dover New Hamphire 03820(US)**
Inventor: **Gardner, John A., Jr.**
**Rt. 152**
**Nottingham New Hamphire 03290(US)**
Inventor: **Carter, John R.**
**Greenwood Road**
**Farmington New Hamphire 03835(US)**
Inventor: **Stadtler, Gunter**
**U.S. Rt. 4**
**Barrington New Hamphire 03825(US)**

(74) Representative: **Hartley, David et al**
**c/o Withers & Rogers 4 Dyer's Buildings**
**Holborn**
**London, EC1N 2JT(GB)**

(54) **Method of forming an insert film.**

(57) A method for applying a film sheet of plastic to a retainer or insert for use in a composite foam product includes the steps of air spraying to remove loose particles and dust; applying a spatter patterned adhesive coating including islands and valleys; fill unsupported areas with snap-in filler pieces; and thereafter applying a film sheet of plastic to the insert by reverse drawing the film sheet into a pressure box, pumping air into the pressure box against the film sheet to form it evenly across the insert and preventing trapped air pockets by relief flow through valleys of the spatter pattern.

## METHOD OF FORMING AN INSERT FILM

This invention relates to methods for forming composite articles and more particularly to methods for forming a mold insert with a film covering which will prevent leakage of foam through insert holes during a foam molding process.

Various proposals have been made to control the escape of foam material from articles during their manufacture. U.S.- A - 3,844,523 discloses a mold with a porous release sheet to provide a path for venting air which is displaced by the rising foam in a production process. U.S. -A- 4,102,721 discloses use of a web strip to cover a hole in a cabinet which is insulated by foam material which fills the cabinet wall space. The web strip provides a vent path while preventing escape of foam through the hole. U.S. -A- 4.130,614 discloses a foam process in which an integral skin with fiber reinforcement is provided to define a vent path and to prevent the escape of foam from a foam cavity.

The aforesaid proposals do not disclose or suggest the application of a sheet of film over a reinforcement member to prevent the escape of foam through holes in the reinforcement member when the reinforcement member is placed in a mold cavity to have foam material formed thereon.

U.S.- A - 4,228,115 discloses a foamed horn pad which includes a metal insert covered by a heat shrinkable film sheet prior to foaming of the horn pad. The film sheet covers various slots and holes in the insert to prevent the escape of foam therethrough during the foaming process. An insert enclosure formed when the film is heat shrunk provides a volume in which trapped gas is captured. Such entrapped volumes are not present in a typical instrument panel configuration in which a film sheet covers an insert.

U.S.- A - 4,477,504 discloses an insert for an instrument panel The insert has a plastic film formed thereover to prevent the escape of foam therethrough. The insert is coated on one side with a layer of adhesive and then the film is vacuum drawn in a known manner to be bonded to the adhesive coated surface of the insert. The coating of adhesive tends to prevent the escape of air trapped between the film and the insert as it is vacuum formed against the insert. Consequently, the film may be wrinkled or puckered in an undesirable manner during the process of vacuum forming a film sheet on the insert to block the escape of foam through the insert holes. Further problems can arise if the film is allowed to bridge over bend segments of the insert or if large unsupported areas allow the film to sag with respect to the insert during the film forming process. Such a vacuum process may partially bond the insert and the film. In such cases the foam and the insert may not meet delamination test standards of original equipment manufactures who are customers for the product which includes the film covered insert.

Other references showing the state of the art in use of film barriers are U.S.-A- Nos. 3,406,229 and U.S.-A-4,407,857. The '229 patent discusses the need to provide a film which is chemically compatible with the foam and the '857 patent discloses the use of foam barriers to prevent foam material from covering hook/loop type fasteners cast in place during the foam process.

One object of the present invention is to provide a method for assembling a plastic film sheet on a reinforcement panel or insert so that the panel can be foamed to produce a composite article which will be free of voids in the foam and in which the film sheet, panel and foam material will be uniformly disposed and bonded together so as to prevent separation of the component parts.

Another object of the present invention is a improve prior methods for forming a sheet of film plastic over an instrument panel insert having holes therein and wherein the film sheet prevents leakage of foam through the insert holes.

According to the present invention there is provided a method for applying a film sheet of plastic on an insert having holes and openings therein for use in the manufacture of a composite foam part, wherein the film sheet serves to cover all the insert holes to prevent foam leakage therethrough during a foam molding process, characterised by applying a spattered pattern of adhesive on one part of the insert to be covered by a film sheet for blocking holes with passages between island portions of the pattern for the escape of trapped air between the film sheet and the insert as the film sheet is draped over the insert; draping the film sheet over the insert to cover the holes therein; and applying pressure against one face of the film sheet to force it into intimate contact with the pattern of adhesive to force to force trapped air from between the adhesive islands through the passages therebetween to uniformly flow the film sheet into bonded relationship with the insert.

According to a specific aspect of the present invention there is a method for applying a film sheet of plastic on an insert having holes and openings therein for use in the manufacture of a composite foam part, wherein the film sheet serves to cover all the insert holes for prevent foam leakage therethrough during a foam moulding process, characterised by:
applying a spattered pattern of adhesive on one part of the insert to be covered by a film sheet for blocking holes with passages between island portions of the adhesive for the escape of trapped air between the film sheet and the insert as the film sheet is draped over the insert; draping the film sheet over the insert to cover the holes therein by reverse drawing the film sheet into a concave shape and moving the insert at a variable rate into the concave shape; and applying a pressure against one face of the film sheet to force it into intimate contact with the pattern of adhesive to force trapped air from between the adhesive islands through the passages therebetween to uniformly flow the film sheet into bonded relationship with the insert

Embodiments of the present invention will now be described by way of example with reference to the accompanying drawings in which:

Fig. 1 is a perspective view of an insert covered by a film according to the present invention; and

Figs. 2-9 are diagrammatic views of apparatus used in practicing the method of the present invention.

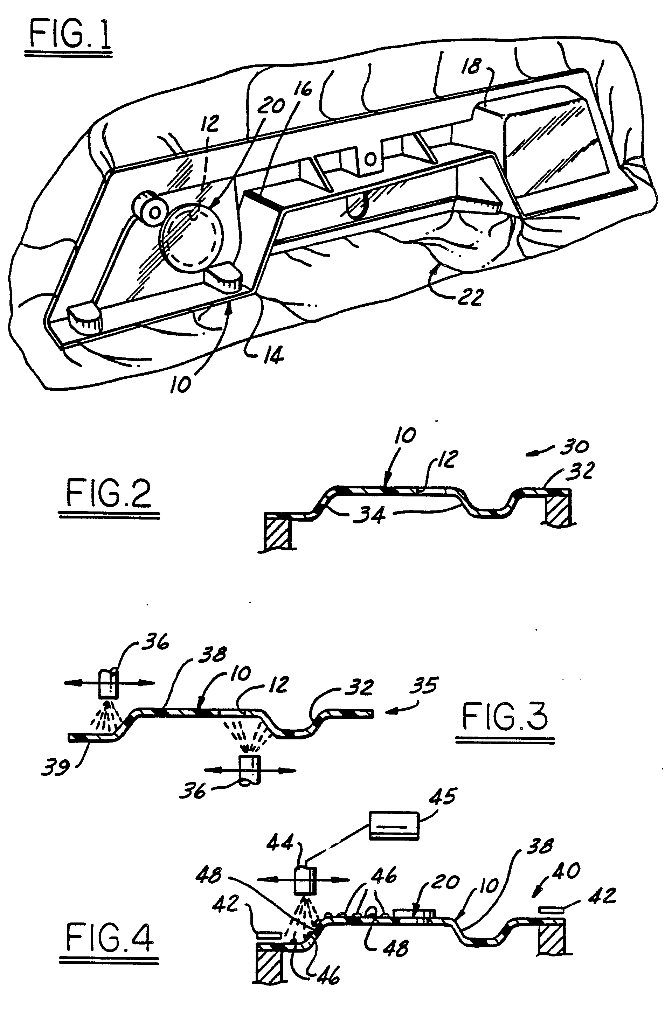

Fig. 1 shows a insert or reinforcing panel 10 for use in an instrument panel of the type more specifically set forth in USSN 889,016 filed July 24,1986 and assigned to a common assignee. The panel 10 has openings 12 and curved segments 14, 16 and 18 that are representative of like features found on inserts used in instrument panels, consoles and other interior trim parts for use in automobiles. The openings are adapted to receive accessories for attachment to the instrument panel such as display clusters, radios, glove compartments and any other useful attachment accessible to the driver of the vehicle.

The opening 12 has a snap filler 20 insert therein which cooperates with a plastic film sheet 22 to block the opening 12 so that the film covered insert can be loaded into a foaming mold into which urethane foam precursors are poured and reacted so as to be bonded to the film covered insert.

Most instrument panel assemblies have a vinyl exterior skin which is bonded to the foam material reacted in the mold. In order to maintain the exterior appearance of such skins it is desirable the foam precursors not leak from the mold during the foaming process. Such leakage results in void formation behind the skin which is a noticeable defect. Further the leakage is wasted foam which must be trimmed from the underside of the insert or retainer. In some cases release agents must be applied to the retainer to facilitate removal of the leakage. Each of the additional steps requires labor and/or material be expended in an unproductive manner.

The present invention involves a unique series of steps to apply a film sheet of plastic to the retainer prior to foaming thereby to eliminate foam leakage while retaining a bonded composite structure which will not separate in use.

In the method of the present invention the barrier film remains with the finished part and hence its performance must meet the performance standards for various applicable instrument panel assembly part specifications. Such specifications include hot and cold cycling tests; oven heat aging tests; humidity tests;and sun exposure and ply adhesion tests.

The method of the present invention achieves optimum film formability and acceptable film to insert and film to foam adhesion characteristics to meet all of the aforesaid test standards.

The applied methodology to obtain the desired performance criteria as well as desired foam sealing includes attention to four categories listed below:

1. Insert preparation
2. Adhesive application
3. Film formation
4. Urethane foaming

As shown in Figures 2 and 3, the insert or retainer 10 is moved to an insert preparation area where it is first loaded onto a fixture 30. The retainer 10 has a peripheral flange 32 supported by the fixture 30. Typically, such fixtures 30 include reverse bend regions 34 or other contoured sections

Next, the insert 10 is removed from the drilling fixture 30 and is located at a part cleaning station 35 where air guns 36 are moved relative to the inboard and outboard surfaces 38 and 39 to thoroughly clean the insert 10.

Following the cleaning step, the insert is moved to an adhesive spray station 40 shown in Fig. 4. This station implements the second category of general process considerations as aforementioned.

Specifically, the adhesive application is a spray operation in which a contact adhesive is applied manually to the outboard surface 38 (foam) side of the insert 10. The adhesive is heated and maintained at a constant temperature to control the application to produce a repeatable splatter pattern.

The surface 38 is maintained at ambient temperature during spraying and is set on a spraying fixture inside of a booth. Masks 42 are used to shield those areas of the insert 10 on which adhesive is not desired or required. Typical regions in this category include internal ductwork and foam trim sections such as openings and mounting surfaces.

The spray is applied by a pressure feed gun 44. The adhesive has a color which contrasts with the color of the insert so that the amount of build up can readily detected. Typically the insert or retainer is a black color which is easily contrasted with the adhesive color. The pressure feed system 45 for the gun includes variable air pressure and delivery rate settings to control the amount of adhesive sprayed against the surface 38. Preferably the pressure is set so that the adhesive will spatter on the surface to form raised islands 46 of adhesive separated by valleys 48 which define relief passages for the flow of trapped air from the surface 38 as a thin film of plastic is draped thereon as will be described. The islands 46 and valleys 48 are shown exaggerated in Fig. 4.

The provision of a relief passages across the surface 38 is especially advantageous when the plastic film 22 is draped across large flat and shallow die draw areas on which film bridging can take place. In general an acceptable adhesive thickness is from 3-4 mils and the average weight is 90 grams per insert part used in vehicular instrument panels.

Following application of the spattered adhesive pattern the insert 10 has preformed snap-in plastic fillers 20 assembled therein at extended large unsupported areas of the insert 10 so as to prevent film breakage or tearing during a subsequent film forming cycle.

The insert 10 is transported to a film forming station 50. The insert transfer period must be of sufficient duration to evaporate the volatile solvents from the adhesive pattern but it must not extend for a time period during which the adhesive will dry or have its strength properties reduced. Preferably, the transfer time will be maintained in a 3 to 20 minute time frame.

The film forming station 50 includes a thermoforming machine 52 having a male type pressure buck 54 in the form of a epoxy laminate with pressure holes 56 therethrough. The male configuration is a close duplication of the pour mold lid on which the insert and film of Fig. 12 will be placed during the foam molding process. Cooling lines 57 are provided to cool the insert 10 and especially the buck runoff area to prevent film sticking when the film sheet 22 is formed thereagainst.

A horizontal land 58 extends beyond the lid shape dimensions on the buck 54 to assure a positive seal between the buck and a stationary pressure box 60. The buck 54 has an attitude which allows for minimum film draw and will thus promote formability by eliminating or minimizing film bridging and webbing.

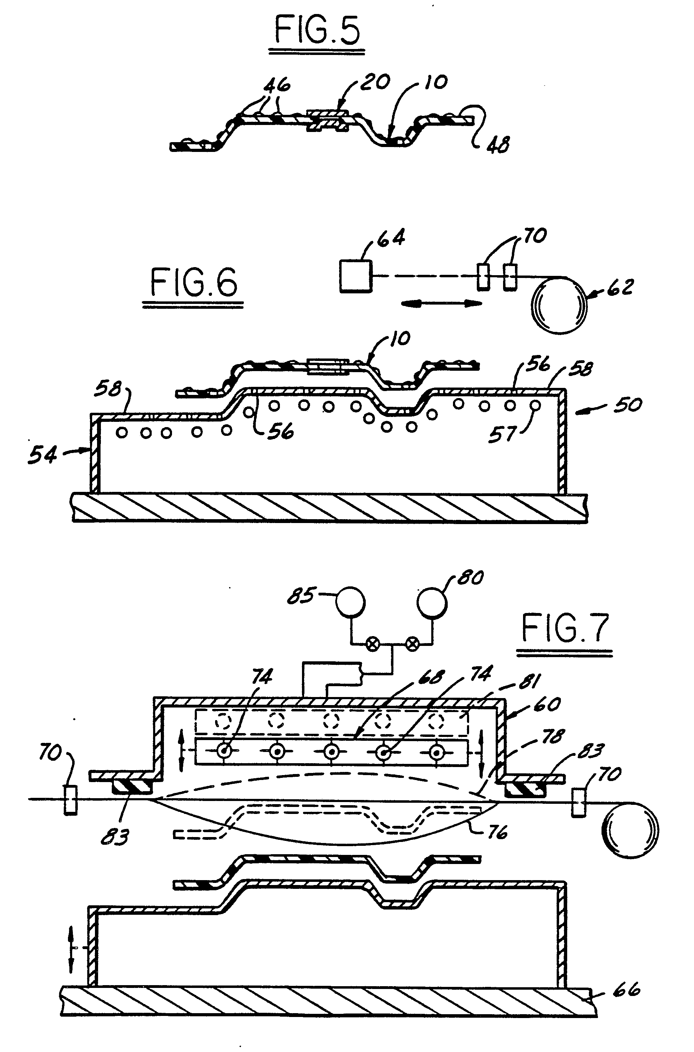

The pressure box 60, shown in Figs. 7-9, is associated with a film source shown as a spool 62 which has a feed 64 for advancing the film 22 as a reach across the top of the buck 54 and below the pressure box 60 (Fig. 7). The film used in the method is a 4-10 mil gauge ionomer Surlyn (trademark of Dupont Company) sold by Dupont. Film gauge will vary in accordance with the part which establishes the insert configuration and the draw requirements. The thickness must be adequate to prevent breaking during the draw process and sufficient to avoid tearing of the film during plant handling and foaming. The film strength (based on thickness) must enable the material to remain intact through the film forming steps and the foaming steps to assure that there will be no foam leakage.

While only one buck 54 is illustrated a typical film forming station 50 can include a machine platen which is large enough to mount two bucks side by side or double up the bucks so that two inserts can be formed simultaneously. Once the machine has the inserts 10 loaded thereon the machine is activated. As shown in Fig. 7, the buck platen 66 is retracted from the zone of a heater 68 located within the pressure box 60. The film 22 automatically advances while clamped in a frame 70 by clamps 72.

The heater has independently quartz zoned wire or ribbon elements 74 which when energized heat the trimmed film 22 to cause a film sag shown in dotted line outline by reference numeral 76 in Fig. 7. The film 22 is then drawn up into the pressure box as a reverse bubble shown by reference numeral 78 by applying vacuum to the pressure box 60 at an inlet thereto from a vacuum source 80. This enables the buck 54 to move into the film 22 without premature contact between the insert 10 and the film 22 to assure a uniform drape of the film 22 onto the adhesive pattern defined by the islands 46 and valleys 48 on the insert 10. At the same time the heater 68 also moves upwardly in the pressure box 60 to the broken line position designated by reference numeral 81 so as to maintain the buck to heater distance constant.

The buck 54 then moves into the heated film 22 to force the insert 10 and the adhesive pattern against the film 22 in a two-stage variable speed movement. This causes the horizontal land 58 on the buck 54 to seal against edge seals 83 on the stationary pressure box 60.

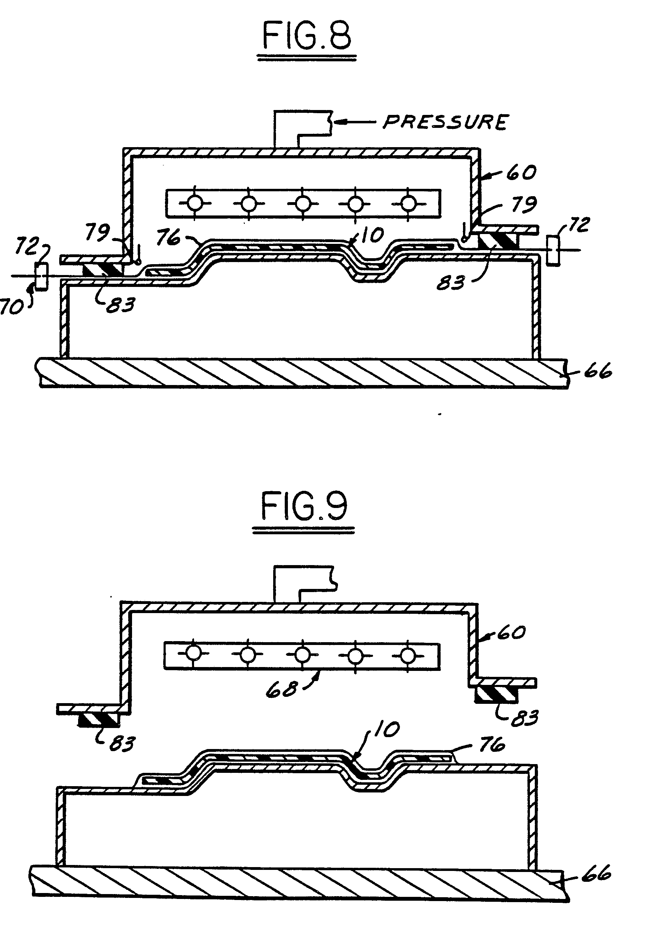

Once the buck 54 is sealed to the pressure box 60 a pressure cycle (Fig. 8) is begun by directing pressurized air into the interior of the pressure box 60 from a pressure source 85. The pressure forces the film 22 uniformly against the adhesive pattern. This assures that the pressure cycle will smoothly force the film 22 into a bonded relationship with the insert 10 without forming wrinkles or buckles in the film 22. The film 22 also flows uniformly against the insert 10 because of the provision of the splattered adhesive and snap fillers 20. The film 22 is then hot wire trimmed by trim elements. At the end of the pressure cycle the buck platen is lowered and is automatically moved toward the machine operator for unloading of a resultant insert and film assembly 90. The cycle is then repeated.

The use of pressure a on the film assures optimum film formability and adhesion to the insert. The insert and film remain in a fixed relationship to the heating elements which prohibits the film from precooling before it is completely draped onto the contour of the insert. Additionally, the application of heat on the top of the insert contributes to the film formation by the application of pressure.

The assembly 90 is then moved to a foaming line where it is loaded on a pour mold lid. The film and insert shape match those of the lid to produce optimum foam seal at the mold edges. The film corners and insert corners are also preformed to fold into shape in the foam mold when the assembly is placed in the mold. The film 22 thereby serves as a means to reduce foam use in the process to those quantities that are required to fill the gap between the insert and an outer decorative polyvinyl chloride skin, and no more. The elimination of leakage of foam also eliminates the cleaning of both the foam mold lid and the insert backside to further reduce costs.

**Claims**

1. A method for applying a film sheet of plastic on an insert having holes and openings therein for use in the manufacture of a composite foam part, wherein the film sheet serves to cover all the insert holes to prevent foam leakage therethrough during a foam molding process, characterised by applying a spattered pattern of adhesive on one part of the insert to be covered by a film sheet for blocking holes with passages between island portions of the pattern for the escape of trapped air between the film sheet and the insert as the film sheet is draped over the insert; draping the film sheet over the insert to cover the holes therein; and applying a pressure against one face of the film sheet to force it into intimate contact with the pattern of adhesive to force trapped air from between the adhesive islands through the passages therebetween to uniformly flow the film sheet into bonded relationship with the insert.

2. A method according to claim 1, comprising preforming the insert as a reinforcement having bends formed therein to define support regions for accessories to be supported on the reinforcement.

3. A method according to claim 1 or claim 2, comprising preforming the insert as a reinforcement having open areas therein to receive accessories to be supported on the reinforcement; providing snap-in fillers and filling the open areas by snap fitting the fillers therein following application of the adhesive spray pattern on one part of the insert; draping the film sheet over the adhesive spray pattern and the insert filled holes defining the unsupported insert areas whereby the film sheet is evenly disposed with respect to the insert prior to the application of bonding pressure thereagainst.

4. A method for applying a film sheet of plastic on an insert having holes and openings therein for use in the manufacture of a composite foam part, wherein the film sheet serves to cover all the insert holes to prevent foam leakage therethrough during a foam molding process, characterised by:
applying a spattered pattern of adhesive on one part of the insert to be covered by a film sheet for blocking holes with passages between island portions of the adhesive for the escape of trapped air between the film sheet and the insert as the film sheet is draped over the insert; draping the film sheet over the insert to cover the holes therein by reverse drawing the film sheet into a concave shape and moving the insert at a variable rate into the concave shape; and applying a pressure against one face of the film sheet to force it into intimate contact with the pattern of adhesive to force trapped air from between the adhesive islands through the passage therebetween to uniformly flow the film sheet into bonded relationship with the insert.

5. A method according to claim 4, comprising preforming the insert as a reinforcement having bends formed therein to define support regions for accessories to be supported on the reinforcement.

6. A method according to claim 4 or claim 5, comprising preforming the insert as a reinforcement having open areas therein to receive accessories to be supported on the reinforcement; providing snap-in fillers and filling the open areas by snap fitting the fillers therein following application of the adhesive spray pattern on one part of the insert; draping the film sheet over the adhesive spray pattern and the insert filled holes defining the unsupported insert areas whereby the film sheet is evenly disposed with respect to the insert prior to the application of bonding pressure thereagainst.

FIG.1

18

20  16

12

16

O

22

14

10

FIG.2

10

30

12

32

34

36

38

10

12

32

35

FIG.3

36

39

45

44

48

46

20

38

40

48

42

46

10

42

FIG.4

48

46

FIG.5

FIG.6

FIG.7

## FIG.8

PRESSURE

60

79

72

79

76

10

72

70

83

83

66

## FIG.9

60

68

83

83

10

76

66